**Europäisches Patentamt**

**European Patent Office**

**Office européen des brevets**

(19)

(11) Veröffentlichungsnummer : **0 429 785 B1**

(12)

# EUROPÄISCHE PATENTSCHRIFT

(45) Veröffentlichungstag der Patentschrift :
**24.11.93 Patentblatt 93/47**

(51) Int. Cl.⁵ : **G01M 7/02**

(21) Anmeldenummer : **90117714.7**

(22) Anmeldetag : **14.09.90**

(54) **Prüfstand für einen Torsionsschwingungstilger.**

(30) Priorität : **01.12.89 DE 3939695**

(43) Veröffentlichungstag der Anmeldung :
**05.06.91 Patentblatt 91/23**

(45) Bekanntmachung des Hinweises auf die
Patenterteilung :
**24.11.93 Patentblatt 93/47**

(84) Benannte Vertragsstaaten :
**DE FR GB IT SE**

(56) Entgegenhaltungen :
DD-A- 129 933
DE-A- 2 311 212

(56) Entgegenhaltungen :
**DE-A- 2 429 129**
**US-A- 4 843 870**
**TECHNISCHES MESSEN T.M. Band 52, Nr. 11,**
**1985, Seiten 393-398, München, DE; H.G.NAT-**
**KE: "Transiente Anregungen von mechani-**
**schen Schwingungen in der Versuchstechnik"**

(73) Patentinhaber : **Firma Carl Freudenberg**
**Höhnerweg 2-4**
**D-69465 Weinheim (DE)**

(72) Erfinder : **Schwibinger, Peter, Dr.**
**Sonnenbergweg 14**
**D-6945 Hirschberg 2 (DE)**
Erfinder : **Wiechert, Michael**
**Lessingstrasse 14 f**
**D-6945 Hirschberg 1 (DE)**

## Beschreibung

Die Erfindung betrifft einen Prüfstand für einen Torsionsschwingungstilger, der einen mittels einer gummielastischen Zwischenschicht an einem Nabenteil festgelegten Schwungring umfaßt, wobei der Nabenteil mit der Antriebswelle einer Antriebseinheit starr verbunden und durch die Antriebseinheit in eine Drehschwingung versetzbar ist.

Ein Prüfstand der vorgenannten Art ist bekannt. Die Antriebseinheit besteht dabei aus einem Hydraulikmotor, der sehr aufwendig in der Beschaffung und hinsichtlich seiner Höchstdrehzahl auf einen Wert von 2000 bis 3000 U/min begrenzt ist. Für zahlreiche Anwendungsfälle ist das völlig unzureichend, und neben dem erheblichen Platzbedarf wird insbesondere die große Wärme- und Lärmentwicklung beanstandet.

Der Erfindung liegt die Aufgabe zugrunde, einen solchen Prüfstand derart weiter zu entwickeln, daß sich bei deutlich reduziertem Beschaffungsaufwand und Platzbedarf eine Verminderung der Wärme- und Geräuschentwicklung ergibt sowie die Möglichkeit, 6000 U/min problemlos zu erreichen.

Diese Aufgabe wird erfindungsgemäß bei einem Prüfstand der eingangs genannten Art mit den kennzeichnenden Merkmalen von Anspruch 1 gelöst. Auf vorteilhafte Ausgestaltungen nehmen die Unteransprüche Bezug.

Bei dem erfindungsgemäßen Prüfstand besteht die Antriebseinheit aus einem permanent erregten Drehstrom-Synchronmotor, bei dem das angelegte Drehfeld derart moduliert ist, daß eine Drehschwingung der Antriebswelle resultiert. Permanent erregte Drehstrom-Synchronmotoren sind an sich bekannt. Sie gelangen üblicherweise in Verwendungen zur Anwendung, in denen es auf höchste Gleichmäßigkeit der erzeugten Drehbewegung ankommt, beispielsweise im Bereich des Antriebes der Vorschubschlitten von Werkzeugmaschinen. Sie sind so ausgelegt, daß die Antriebswelle exakt der durch die Frequenz des speisenden Netzes vorgegebenen Drehbewegung des Drehfeldes in dem Motor folgt. Die hierzu erforderliche Stromaufnahme paßt sich automatisch der Belastung an.

Erfindungsgemäß ist es demgegenüber vorgesehen, daß das an den permanent erregten Drehstrom-Synchronmotor angelegte Drehfeld derart moduliert ist, daß eine Drehschwingung der Antriebswelle resultiert.

Hierdurch ergibt sich, von der Drehzahl unabhängig, eine schwingende Hin- und Herbewegung der Antriebswelle von definierter Größe, die auf den Nabenteil des zu prüfenden Torsionsschwingungsdämpfers übertragen wird und es erlaubt, Kenndaten über dessen Betriebsverhalten zu ermitteln.

Einige Kenndaten des Prüflings können unter Vermeidung einer fortschreitenden Drehbewegung der Antriebswelle besonders einfach erhalten werden, beispielsweise Kenndaten über die sich während der Durchführung einer Prüfung des Prüflings ergebenden, elastischen Deformierungen der Zwischenschicht.

Die Zwischenschicht besteht in Abhängigkeit von dem im einzelnen vorgesehenen Verwendungszweck des zu prüfenden Torsionsschwingungstilgers aus Gummiqualitäten einer bestimmten, elastischen Nachgiebigkeit. Der diesbezügliche Wert geht unmittelbar ein in die sich im Einzelfalle ergebende Resonanzschwingung, und es ist unter diesem Gesichtspunkt sinnvoll, wenn das Drehfeld derart modulierbar ist, daß sich eine Drehschwingung von veränderlicher Amplitude ergibt. Das kann erfolgen unter Verwendung eines an sich bekannten Funktionsgenerators, der sein Ausgangssignal in einen motorgeführten Transistor-Pulsumrichter eingibt. Hierin wird die während der bestimmungsgemäßen Verwendung von dem permanent erregten Drehstrom-Synchronmotor benötigte, modulierte Netzspannung bereitgestellt.

Torsionsschwingungstilger sind während ihrer bestimmungsgemäßen Verwendung häufig der Einwirkung großer Drehzahlen ausgesetzt, was mitunter erhebliche Fliehkräfte und entsprechend große, elastische Deformierungen der Zwischenschicht zur Folge hat. Um die diesbezüglichen Zusatzbelastungen mit zu berücksichtigen, ist es erforderlich, die Antriebswelle zusätzlich zu ihrer Drehschwingung in eine fortschreitende Drehbewegung zu versetzen, was mit Hilfe einer entsprechenden Modulierung des Drehfeldes problemlos möglich ist.

Bei Ausführungen, bei denen das Drehfeld derart moduliert ist, daß sich eine Drehbewegung ergibt, die hinsichtlich ihrer Drehgeschwindigkeit variierbar ist, besteht die Möglichkeit, eine exakte Anpassung an die sich während der bestimmungsgemäßen Verwendung ergebenden Belastungen vorzunehmen.

Torsionsschwingungstilger haben nur in einem relativ schmalen Frequenzband eine optimale Wirksamkeit, und es empfiehlt sich unter diesem Gesichtspunkt, die Resonanzfrequenz an die Frequenz derjenigen Drehschwingung anzupassen, die sich während der bestimmungsgemäßen Verwendung in einer besonders störenden Weise bemerkbar macht. Die Ermittlung der Resonanzfrequenz eines Torsionsschwingungstilgers stellt unter diesem Gesichtspunkt eine häufig wiederkehrende Aufgabe dar. Sie wird unter Verwendung des erfindungsgemäßen Prüfstandes dadurch gelöst, daß das Drehfeld derart moduliert ist, daß der durch die Zwischenschicht des zu prüfenden Torsionsschwingungstilgers drehelastisch mit dem Schwungring verbundene Nabenteil einschließlich der Antriebswelle in eine Resonanzbewegung gelangt. Das sich ergebende System läßt sich als Torsionsschwingungstilger darstellen, bei dem die Zwischenschicht zwei Trägheitsmassen federelastisch verbindet, wobei die Trägheitsmassen zum einen durch den Schwungring und zum anderen durch den Nabenteil einschließlich der Antriebswelle gebildet sind.

Die zugehörige Resonanzfrequenz wird nach der folgenden Formel erhalten:

$$\omega O = \sqrt{\frac{K_G \cdot {}^{I_T + I_M}}{I_T \cdot I_M}}$$

Hierin bezeichnen:

$\omega O$ =     Resonanzfrequenz des ungedämpften Systems

$K_G$ =     Torsionssteifigkeit der elastischen Zwischenschicht

$I_T$ =     Massenträgheitsmoment des Schwungringes

$I_M$ =     Massenträgheitsmoment der Antriebswelle einschließlich des Nabenteils

Unter Verwendung des erfindungsgemäßen Prüfstandes lassen sich praxisnahe Untersuchungen an Torsionsschwingungsdämpfern vornehmen, insbesondere Untersuchungen, welche fliehkraftbedingte Deformierungen der Zwischenschicht sowie die Abführung der betriebsbedingt in deren Bereich entstehenden Wärme mit berücksichtigen. Darüber hinaus läßt sich das Betriebsverhalten von drehzahladaptiven Drehschwingungstilgern sehr exakt untersuchen, beispielsweise das Betriebsverhalten von Ausführungen, welche bei voneinander abweichenden Drehzahlen von beispielsweise 1000, 2000 und 3000 U/min voneinander abweichende Resonanzfrequenzen aufweisen.

Der Gegenstand der Erfindung wird nachfolgend anhand der als Anlage beigefügten Zeichnung weiter verdeutlicht.

Es zeigen:

Fig. 1     eine beispielhafte Ausführung eines Prüfstandes einschließlich der zugehörigen Steuerung;

Fig. 2     das Wirkungsprinzip des erfindungsgemäßen Prüfstandes;

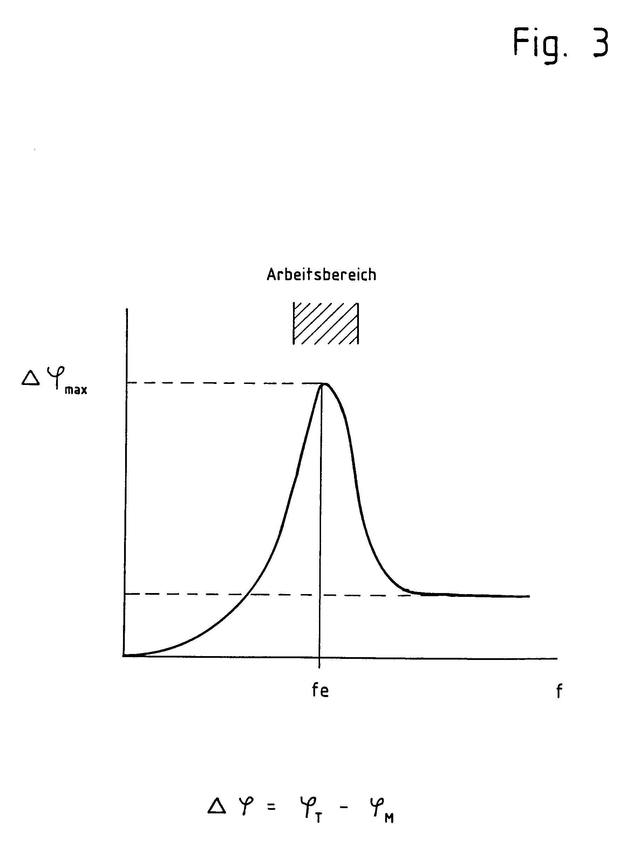

Fig. 3     eine beispielhafte Resonanzkurve eines Prüflinges, in der die Relativverdrehung zwischen Schwung- und Nabenring über der Erregerfrequenz aufgetragen ist.

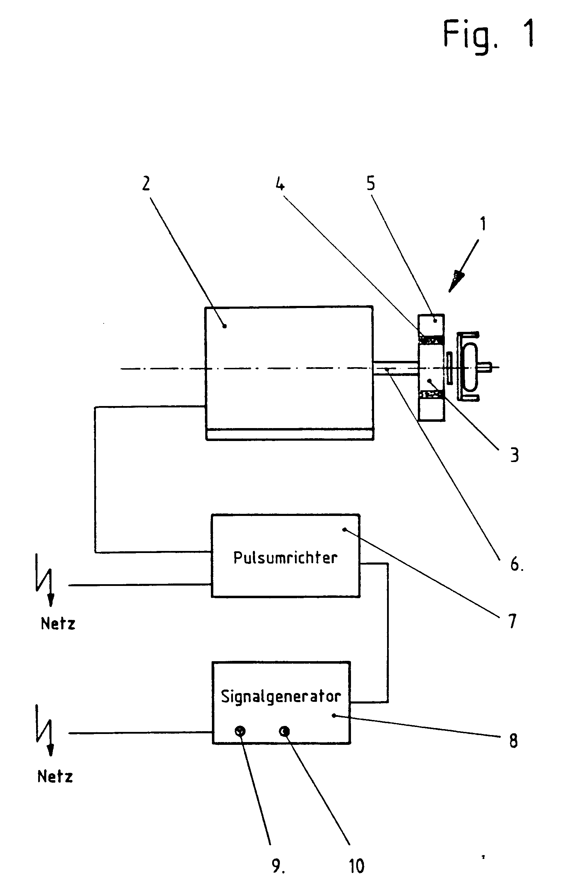

Der in Fig. 1 dargestellte Prüfstand ist für die Durchführung von Untersuchungen an Torsionsschwingungstilgern bestimmt, welche beispielsweise an der Kurbelwelle eines Kfz-Motors zur Anwendung gelangen können. In Abhängigkeit von der Ausbildung der Kurbelwelle und der Anzahl der Kolben ergeben sich hierbei Drehschwingungen, die beispielsweise eine Drehamplitude von 1° haben können. Drehschwingungstilger gelangen primär an Kurbelwellen zur Anwendung, um eine Reduzierung der von diesen erregten Drehschwingungen zu erreichen, mit dem Ziel, eine Übertragung auf die Karosserie des Kraftfahrzeuges zu verhindern. Zur Überprüfung der diesbezüglichen Wirksamkeit und der Dauerhaltbarkeit wird der Torsionsschwingungstilger 1 mit der Antriebswelle eines erfindungsgemäß modulierten, permanent erregten Drehstrom-Synchronmotors 2 über den Nabenteil 3 verbunden. An dem Nabenteil 3 ist mittels einer gummielastischen Zwischenschicht 4 der Schwungring 5 festgelegt. Dieser vermag sich unter elastischer Deformierung der Zwischenschicht 4 relativ zu dem Nabenteil 3 in Umfangsrichtung hin- und hergehend zu verlagern.

In einer ersten Untersuchung wird das an den permanent erregten Drehstrom-Synchronmotor 2 angelegte Drehfeld derart moduliert, daß nur eine hin- und hergehende Drehschwingung der Antriebswelle 6 resultiert. Dazu ist der permanent erregte Drehstrom- Synchronmotor 2 in folgender Weise mit einer Steuerung verbunden:

Die Steuerung des Drehstromsynchronmotors 2 besteht im wesentlichen aus einem Pulsumrichter 7 und einem Signalgenerator 8. In dem Signalgenerator 8 wird das für die Steuerung des Drehstrom-Synchronmotors 2 benötigte Sollwertsignal bereitgestellt und an den Pulsumrichter 7 übergeben.

Dieser ist mit einem Netzanschluß versehen und mit Einrichtungen, die es ermöglichen, den Leistungsstrom so zu modulieren, daß das Istwertsignal der Motorwelle 6 dem Sollwertsignal des Signalgenerators 8 folgt. Das Sollwertsignal des Signalgenerators umfaßt einen Gleichstrom- und einen Wechselstromanteil, die durch eine Betätigung der Einstellhilfsmittel 9, 10 wahlweise veränderbar sind. Die hin- und hergehende Drehschwingung der Antriebswelle läßt sich hierdurch mit einer kontinuierlichen Drehbewegung überlagern, wobei die Möglichkeit besteht, sowohl die Drehschwingung als auch die Drehbewegung in dem erforderlichen Maße zu verändern. Das Betriebsverhalten des Torsionsschwingungsdämpfers läßt sich hierdurch praxisnah erfassen und bei sich ergebenden Unzulänglichkeiten durch eine Überarbeitung der untersuchten Ausführung verbessern.

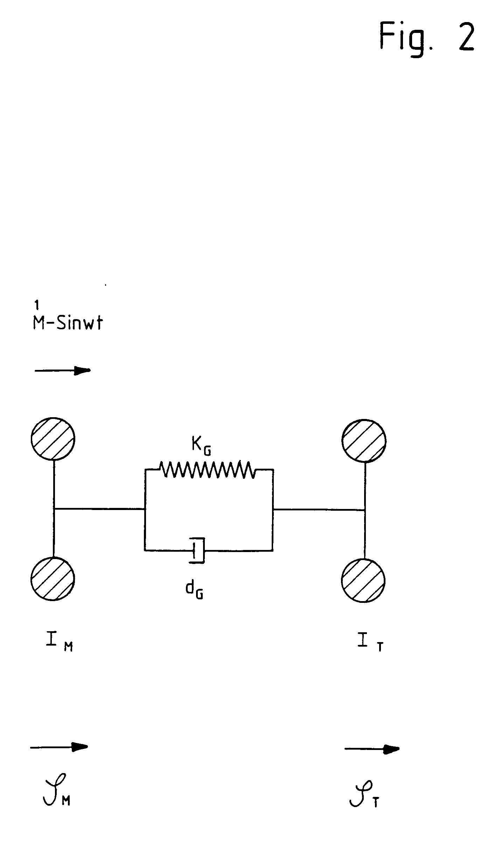

In Fig. 2 ist das Wirkungsprinzip des erfindungsgemäßen Prüfstandes gezeigt. Im linken Teil der Darstellung ist die Trägheitsmasse der drehenden Teile des Motors 2 $I_M$ einschließlich des Nabenringes 3 gezeigt, welche durch die der Gummischicht 4 eigene Federelastizität $K_G$ und die Gummidämpfung $d_G$ mit der im rechten Teil der Darstellung wiedergegebenen Trägheitsmasse $I_T$ des Schwungringes 5 verbunden ist. Die Motorwelle 6 wird während der bestimmungsgemäßen Verwendung des Prüfstandes in eine Drehschwingung versetzt, welche in Abhängigkeit von der Federelastizität $K_G$ und der Gummidämpfung $d_G$ der Zwischenschicht 4 mehr oder weniger synchron auf den Schwungring 5 übertragen wird. In Abhängigkeit von der jeweiligen Modulierung des an den Motorläufer wirksamen Drehfeldes ergibt sich dabei eine Relativverdrehung des Schwungringes 5 gegenüber der Antriebswelle 6 des Motors 2 unter elastischer Verformung der Zwischenschicht 4 gemäß Fig. 1.

Besonders zweckmäßig ist es, den Prüfstand so zu betreiben, daß sich eine Resonanzbewegung des Schwungringes 5 auf dem Nabenring 3 ergibt. Auf diese Weise läßt sich die Dauerhaltbarkeit des Torsionsschwingungstilgers in kurzer Zeit ermitteln.

## Patentansprüche

1. Prüfstand für einen Torsionsschwingungstilger, der einen mittels einer gummielastischen Zwischenschicht an einem Nabenteil festgelegten Schwungring umfaßt, wobei der Nabenteil mit der Antriebswelle einer Antriebseinheit verbunden und durch die Antriebseinheit der Einwirkung von Drehschwingungen aussetzbar ist, dadurch gekennzeichnet, daß die Antriebseinheit aus einem permanent erregten Drehstrom-Synchronmotor (2) besteht, bei dem das angelegte Drehfeld derart moduliert ist, daß eine Drehschwingung der Antriebswelle (6) resultiert.

2. Prüfstand nach Anspruch 1, dadurch gekennzeichnet, daß das Drehfeld derart moduliert ist, daß sich eine Drehschwingung von veränderlicher Amplitude ergibt.

3. Prüfstand nach Anspruch 1 bis 2, dadurch gekennzeichnet, daß das Drehfeld derart moduliert ist, daß sich eine fortschreitende Drehbewegung der Antriebswelle (6) ergibt.

4. Prüfstand nach Anspruch 3, dadurch gekennzeichnet, daß das Drehfeld derart moduliert ist, daß sich eine Drehbewegung der Antriebswelle (6) ergibt, die hinsichtlich ihrer Drehgeschwindigkeit variierbar ist.

5. Prüfstand nach Anspruch 1 bis 4, dadurch gekennzeichnet, daß das Drehfeld derart moduliert ist, daß der durch die Zwischenschicht (4) drehelastisch mit dem Schwungring (5) verbundene Nabenteil (3) einschließlich der Antriebswelle (6) in eine Resonanzbewegung gelangt.

## Claims

1. A test rig for a torsional vibration absorber which comprises a fly-ring fixed on a hub part by means of a rubber-elastic intermediate layer, the hub part being connected to the drive shaft of a driving unit and being subjectable to the action of torsional vibrations by the driving unit, characterised in that the driving unit comprises a permanently excited three-phase synchronous motor (2) in which the rotating field applied is modulated in such a way that a torsional vibration of the drive shaft (6) results.

2. A test rig according to claim 1, characterised in that the rotating field is modulated in such a way that a torsional vibration of variable amplitude is obtained.

3. A test rig according to either of claims 1 and 2, characterised in that the rotating field is modulated in such a way that a progressive rotary motion of the drive shaft (6) is obtained.

4. A test rig according to claim 3, characterised in that the rotating field is modulated in such a way that a rotary motion of the drive shaft (6) is obtained which is variable as regards its angular velocity.

5. A test rig according to any of claims 1 to 4, characterised in that the rotating field is modulated in such a way that the hub part (3) connected in torsionally elastic fashion to the fly-ring (5) by the intermediate layer (4), together with the drive shaft (6), takes on a resonant motion.

## Revendications

1. Banc d'essai pour un amortisseur d'oscillations en torsion, qui comporte un anneau d'équilibrage fixé sur une partie-moyeu à l'aide d'une couche intermédiaire ayant l'élasticité du caoutchouc, la partie-moyeu étant reliée rigidement à l'arbre d'entraînement d'une unité d'entraînement et pouvant être mise en oscillations angulaires par l'unité d'entraînement, caractérisé en ce que l'unité d'entraînement se compose d'un moteur synchrone 2 à courant triphasé et excitation permanente, dans lequel le champ tournant appliqué est modulé de telle sorte qu'il résulte une oscillation angulaire de l'arbre d'entraînement (6).

2. Banc d'essai selon la revendication 1, caractérisé en ce que le champ tournant est modulé de telle sorte qu'il se produise une oscillation angulaire d'amplitude variable.

3. Banc d'essai selon l'une des revendications 1 et 2, caractérisé en ce que le champ tournant est modulé de telle sorte qu'il se produise un mouvement angulaire progressif de l'arbre d'entraînement (6).

4. Banc d'essai selon la revendication 3, caractérisé en ce que le champ tournant est modulé de telle sorte qu'il se produit un mouvement angulaire de l'arbre d'entraînement (6), qui peut être modifié en ce qui concerne sa vitesse angulaire.

5. Banc d'essai selon l'une des revendications 1 à 4, caractérisé en ce que le champ tournant est modulé de telle sorte que la partie-moyeu (3), reliée à l'anneau d'équilibrage (5) par la couche intermédiaire (4) avec élasticité en torsion soit soumise, y compris l'arbre d'entraînement (6), à un mouvement de résonance.

# Fig. 1

Pulsumrichter

Netz

Signalgenerator

Netz

# Fig. 2

# Fig. 3

Arbeitsbereich

$$\Delta \varphi = \varphi_T - \varphi_M$$